# NEUE EUROPÄISCHE PATENTSCHRIFT

(11) **EP 0 906 214 B2**
(45) Veröffentlichungstag und Bekanntmachung des Hinweises auf die Entscheidung über den Einspruch: **20.01.2010**
(45) Hinweis auf die Patenterteilung: 13.02.2002
(21) Anmeldenummer: 97928248.0
(22) Anmeldetag: 19.06.1997
(51) Int. Cl.: B62D 53/08, C23C 4/02

(54) **KUPPLUNGSVORRICHTUNG ZUM VERBINDEN EINES ZUGFAHRZEUGES MIT EINEM AUFLIEGER-ANHÄNGER UND VERFAHREN ZUM UMBAUEN VON KUPPLUNGSVORRICHTUNGEN**
COUPLING DEVICE FOR CONNECTING A TOWING VEHICLE TO A SEMI-TRAILER, AND PROCESS FOR THE MODIFICATION OF COUPLING DEVICES
DISPOSITIF D'ACCOUPLEMENT POUR RELIER UN VEHICULE TRACTEUR A UNE SEMI-REMORQUE, ET PROCEDE POUR LA MODIFICATION DES DISPOSITIFS D'ACCOUPLEMENT

(30) Priorität: 21.06.1996 DE 19624803; 24.10.1996 DE 19644265; 15.11.1996 DE 19647211
(43) Veröffentlichungstag der Anmeldung: 07.04.1999
(73) Patentinhaber: Hunger, Walter, D-97074 Würzburg (DE)
(72) Erfinder: Hunger, Walter, D-97074 Würzburg (DE)
(74) Vertreter: Witte, Weller & Partner
(86) Internationale Anmeldenummer: PCT/EP1997/003205
(87) Internationale Veröffentlichungsnummer: WO 1997/049600

(56) Entgegenhaltungen:
- CH-A- 684 575
- DE-A- 3 833 910
- DE-A1- 3 530 467
- US-A- 2 973 210
- PATENT ABSTRACTS OF JAPAN vol. 11, no. 357 (C-458), 20.November 1987 & JP 62 127466 A (TOSHIBA CORP), 9.Juni 1987,
- ART. NR. 553 DER KONSTRUKTEUR Bd. 05/93, Mai 1993, DONAUESCHINGEN, Seite 58

## Beschreibung

Die Erfindung betrifft eine Kupplungsvorrichtung zum Verbinden eines Zugfahrzeuges mit einem Auflieger-Anhänger, bei der an dem Anhänger ein Königszapfen und an dem Zugfahrzeug eine Sattelkupplung mit Schloßelementen zum formschlüssigen und drehbaren Ergreifen von im wesentlichen rotationssymmetrischen Oberflächen des Königszapfens angeordnet sind, wobei die Oberflächen durch eine abriebfeste thermische Beschichtung gebildet werden.

Eine Kupplungsvorrichtung der vorstehend genannten Art ist aus der DE-A1-43 04 857 bekannt.

Die Erfindung betrifft ferner ein Verfahren zum Umbauen von Kupplungsvorrichtungen für das Verbinden eines Zugfahrzeuges mit einem Auflieger-Anhänger, bei denen an dem Anhänger ein Königszapfen und an dem Zugfahrzeug eine Sattelkupplung mit Schloßelementen zum formschlüssigen und drehbaren Ergreifen von im wesentlichen rotationssymmetrischen Oberflächen des Königszapfens angeordnet sind, in einen Zustand, in dem ein schmiermittelfreier und damit wartungsfreier Betrieb der Kupplungsvorrichtung möglich ist.

Sattelkupplungen dienen zum formschlüssigen, jedoch gelenkigen Verbinden von Auflieger-Zugfahrzeugen oder Sattelzugmaschinen mit Auflieger-Anhängern oder Sattelanhängern, die dann zusammen einen sogenannten Sattelzug bilden.

Am Zugfahrzeug ist dabei ein Kupplungssattel angeordnet, der in der Draufsicht im wesentlichen hufeisenförmig ausgebildet ist, so daß ein Maul in die rückwärtige Richtung des Zugfahrzeuges zeigt. Am Grunde des Mauls ist ein ebenfalls hufeisenförmiges Teil, der sogenannte Verschleißring, angebracht. Beidseits des Verschleißringes finden sich Schloßteile, insbesondere ein sogenannter Schloßhaken oder Verschlußhaken, die zunächst, d.h. bei geöffneter Sattelkupplung, außer Eingriff mit der Maulöffnung sind.

Am Auflieger befindet sich an der Unterseite des vorderen Endes ein nach unten weisender sogenannter Königszapfen, der zum Verbinden von Zugfahrzeugen und Auflieger in die Maulöffnung eingeschoben wird, bis er in Anlage am Verschleißring gerät. Die Schloßteile werden nun in ihre Schließstellung gebracht und umfassen den Königszapfen formschlüssig. Die dabei in Anlage aneinanderkommenden Oberflächen des Verschleißringes, des Schloßhakens und des Königszapfens lassen jeweils eine Drehung des Sattelzapfens im Kupplungssattel zu. Sie sind also insoweit mit rotationssymmetrischen Oberflächen ausgebildet.

Verschleißring und Verschlußhaken bilden im geschlossenen Zustand dementsprechend einen kreisförmigen Ring. Der in der Anordnung aus Verschlußhaken und Verschleißring aufgenommene Königszapfen hat kein oder nur ein minimales Spiel, damit eine ruckfreie Verbindung zwischen Anhänger und Zugmaschine hergestellt wird.

Oberflächen des Verschleißringes und des Verschlußhakens, die den Königszapfen zusammen umschlingen, bilden dabei Anlageflächen für den Königszapfen.

Während des Fahrbetriebes, insbesondere während Kurvenfahrten, wenn sich der Königszapfen in der Anordnung aus Verschleißring und Verschlußhaken dreht, treten entsprechend starke Reibungen zwischen diesen Teilen auf, die zu Reibungsverlusten und einem Verschleiß von Königszapfen, Verschleißring und Verschlußhaken führen. Nach entsprechend langer Betriebsdauer vermindert sich verschleißbedingt der Durchmesser des Königszapfens.

Einschlägige Empfehlungen sehen vor, daß eine maximale Durchmesserverminderung des Königszapfens von etwa 2 mm zulässig ist, dann muß der Königszapfen ausgetauscht werden.

Sattelkupplungen der vorstehend geschilderten Art sind allgemein bekannt und werden in großem Umfange standardmäßig bei Sattelzügen eingesetzt.

Ein wesentliches Problem bei Sattelkupplungen herkömmlicher Art ist die Reibung zwischen den aneinander anliegenden Oberflächen von Zugfahrzeug einerseits und Auflieger andererseits, insbesondere im Bereich der Auflage auf dem Kupplungssattel sowie im Bereich des Königszapfens. Bei herkömmlichen Sattelkupplungen wird deswegen eine sogenannte Plattenschmierung eingesetzt, bei der breite Schmiernuten für eine optimale Fettung der Auflageflächen im Kupplungssattel vorgesehen sind. Aufgrund der relativ großen Abmessungen von Kupplungssätteln ergeben sich entsprechend große Mengen an Schmierfett.

Es ist bekannt, daß derartige herkömmliche, geschmierte Sattelkupplungen ein erhebliches Umweltproblem darstellen, weil große Mengen Schmierfett von diesen Sattelkupplungen in die Umwelt gelangen und damit eine Gefährdung z.B. für das Grundwasser darstellen.

Es sind daher bereits zahlreiche Sattelkupplungen bekannt, bei denen im Bereich der Auflagefläche des Kupplungssattels sogenannte Antifriktionsbeläge eingesetzt werden. Derartige Sattelkupplungen werden als "wartungsarm" bezeichnet, weil bei diesen nur noch die Lagerung des Königszapfens im Schloß der Sattelkupplung geschmiert werden muß.

In der DE 35 30 467 A1 wird für eine Sattelkupplung vorgeschlagen, die mit dem Königszapfen in Anlage kommenden Oberflächen des Verschleißringes und des Verschlußhakens mit einer Antifriktionsschicht zu versehen. Als Antifriktionsschicht wurde ein Polytetrafluorethylen-Werkstoff (PTFE) verwendet. Die Antifriktionsschicht besteht genauer aus einem PTFE-beschichteten Netzgewebe, das auf die betreffenden Oberflächen des Verschleißringes und des Verschlußhakens in einer Ausfräsung derselben geklebt ist.

Obwohl PTFE auch aus anderen Gebieten (Beschichtung von Kochgeschirr, Bügeleisensohlen) bekannte hervorragende Gleit- und Antiadhäsionseigenschaften besitzt, besteht ein Nachteil einer Antifriktionsschicht für Kupplungssattlungen aus PTFE darin, daß das PTFE selbst in der Praxis extremen Verschleiß unterworfen ist. Neben einem merklichen Fließverhalten unter statischer Belastung, der die auf dem Verschleißring und dem Verschlußhaken aufgebrachte PTFE-Schicht unterworfen ist, was schnell zu nicht mehr akzeptablen Toleranzen bei einem Einsatz von PTFE bei Sattelkupplungen führt, bietet PTFE praktisch keinen Verschleißwiderstand gegenüber abrasiven Materialien.

Gerade ein hoher Widerstand gegen ein Wegfließen der Antifriktionsschicht ist jedoch bei einer Sattelkupplung wegen der hohen von dem Königszapfen auf den Verschleißring und den Verschlußhaken wirkenden Flächenpressung erforderlich. Ebenso wirkt der Königszapfen, wenn auf eine Schmierung teilweise oder ganz verzichtet werden soll, was unbedingt wünschenswert ist, gegenüber dem PTFE stark abrasiv, so daß ein zu schneller Verschleiß der PTFE-Beschichtung die Folge ist.

Andererseits sind auch Antifriktionsschichten aus harten Metallverbindungen wie Titaniumnitrid für Sattelkupplungen verwendet worden, die zwar die Anlageflächen des Verschlußhakens und Verschleißringes gegen Abrasion schützen, jedoch im gleichen Maße die Abrasion des Königszapfens erhöhen. Dies hat zur Folge, daß auch der Königszapfen mit einer Antifriktionsschicht versehen werden muß, was aber den Aufwand erheblich erhöht.

Aus der DE-A-37 28 090 ist eine vollständig wartungsfreie Sattelkupplung bekannt. Bei dieser bekannten Sattelkupplung ist der Königszapfen in einem teilbaren Wälzlager gehalten, das beim Einkuppeln des Anhängers geöffnet und dann in der Kupplungsstellung wieder verschlossen wird. Das Wälzlager ist schmiermittelfrei und gestattet eine Drehung des Königszapfens im Schloß der Sattelkupplung.

Aus der eingangs genannten DE-A1-43 04 857 ist bekannt, sowohl im Bereich der Auflagefläche der Sattelkupplung als auch im Bereich des Königszapfens eine thermische Beschichtung vorzusehen. Diese thermische Beschichtung besteht aus einer thermisch gespritzten Hartstoffschicht, bspw. einem keramischen Oxid, insbesondere Aluminiumoxid oder Titanoxid, auf die eine Gleitstoffschicht, insbesondere Polytetrafluorethylen, aufgebracht wird. Derartige Beschichtungssysteme sind auch aus anderen Bereichen der Technik bekannt, bspw. der Technik der Beschichtung von Druckmaschinenzylindern, von Bratpfannen und von Bügeleisensohlen.

Keramische Werkstoffe haben den grundsätzlichen Nachteil, daß sie relativ spröde und damit gegenüber Stoßbelastungen empfindlich sind. Andererseits können bei Sattelkupplungen erhebliche Stoßbelastungen auftreten, insbesondere dann, wenn ein Anhänger an ein Zugfahrzeug angekuppelt wird.

Aufgrund der erheblichen Problematik im Hinblick auf den Umweltschutz ist darüber hinaus erwogen worden, Verfahren bereitzustellen, mit denen herkömmliche geschmierte Sattelkupplungen in einen Zustand überführt werden können, in dem ein zumindest schmiermittelarmer und damit wartungsarmer Betrieb möglich ist. In diesem Zusammenhang ist bereits überlegt worden, im Betrieb befindliche Sattelkupplungen dadurch aufzuarbeiten, daß man auf der Auflagefläche des Sattels die weiter oben erwähnten Antifriktionsbeläge anbringt, um auf diese Weise zumindest den Schmiermittelanteil zu reduzieren, der bei einer herkömmlichen Flächenschmierung erforderlich ist.

Ein Umbau in einen völlig wartungsfreien Zustand ist damit jedoch nicht möglich.

Der Erfindung liegt daher die Aufgabe zugrunde, eine Kupplungsvorrichtung und ein Verfahren der eingangs genannten Art dahingehend weiterzubilden, daß sowohl bei neu hergestellten, aber auch durch Umbau von bereits im Betrieb befindlichen Sattelkupplungen ein vollständig schmiermittelfreier und damit wartungsfreier Betrieb möglich wird.

Ferner soll angestrebt werden, die Kupplungsvorrichtung der eingangs genannten Art dahingehend zu verbessern, daß ohne Einsatz von Schmiermitteln der Verschleiß und die Reibungsverluste zwischen Königszapfen, Verschleißring und Verschlußhaken reduziert werden und damit die Wartungsfreundlichkeit und Umweltfreundlichkeit der Sattelkupplung erhöht wird.

Bei einer Kupplungsvorrichtung der eingangs genannten Art wird diese Aufgabe erfindungsgemäß dadurch gelöst, daß die Oberflächen durch äußere Oberflächen einer auf dem Königszapfen sitzenden und thermisch beschichteten Hülse gebildet werden, wobei die Hülse mit inneren Oberflächen drehbar auf dem Königszapfen angeordnet ist.

Bei einem Verfahren der eingangs genannten Art wird die Aufgabe erfindungsgemäß durch die folgenden Schritte gelöst:
a) Abdrehen der Oberflächen des Königszapfens um ein vorbestimmtes Aufmaß;
b) Herstellen einer Hülse zum Aufsetzen auf den abgedrehten Königszapfen, wobei die Wandstärke der Hülse im wesentlichen gleich dem Aufmaß ist;
c) thermisches Beschichten mindestens der äußeren Oberfläche der Hülse mit einer abriebfesten Beschichtung; und
d) Aufsetzen der Hülse auf den abgedrehten Königszapfen, derart, daß die Hülse auf dem Königszapfen drehbar ist.

Die der Erfindung zugrundeliegende Aufgabe wird auf diese Weise vollkommen gelöst.

Dadurch, daß auf dem Königszapfen eine schwimmend gelagerte Hülse angeordnet wird, deren Oberflächen zumindest teilweise abriebfest thermisch beschichtet sind, wird zunächst eine erhebliche Vergrößerung der belasteten Flächen erreicht. Während nämlich bei herkömmlichen Kupplungsvorrichtungen der Verschleißring und der Schloßhaken jeweils nur entlang kleiner, bogenförmiger Oberflächenabschnitte an den entsprechenden Oberflächen des Königszapfens anliegen, wird erfindungsgemäß erreicht, daß die gesamte Innenoberfläche der Hülse ebenfalls eine Gleitpaarung bildet, so daß die Belastung pro Flächeneinheit wesentlich geringer wird.

Dies gilt insbesondere im Hinblick auf Stoßbelastungen, die bei der erfindungsgemäßen Hülse über wesentlich größere Oberflächen abgefangen werden.

Darüber hinaus gestattet es die Verwendung einer Hülse, nahezu beliebige thermische oder andere Beschichtungsverfahren einzusetzen, da jeweils nur ein relativ kleines Element, nämlich die Hülse, beschichtet werden muß. Es ist daher nicht erforderlich, den Königszapfen selbst zu beschichten, wobei der Königszapfen mit dem zugehörigen Befestigungsflansch ein Bauteil von erheblichen Abmessungen und erheblichem Gewicht ist.

Wie bereits erwähnt wurde, ist die Erfindung sowohl bei der Herstellung neuer Kupplungsvorrichtungen einsetzbar als auch bei der Aufarbeitung bereits im Betrieb befindlicher KuppIungsvorrichtungen.

Im erstgenannten Fall muß der Königszapfen werkseitig so hergestellt werden, daß sein Außenumfang um die Wandstärke der Hülse kleiner ist als dies den genormten Außenabmessungen eines Standard-Königszapfens entspricht.

Beim Aufarbeiten gebrauchter Kupplungsvorrichtungen ist es hingegen erforderlich, den Königszapfen zu bearbeiten, indem dessen Oberflächen entsprechend abgedreht werden. Dies ist jedoch nur dann möglich, wenn der Verschleiß des Königszapfens nicht schon ein zu großes Ausmaß angenommen hat. Bei einem praktischen Ausführungsbeispiel der Erfindung hat die aufgeschobene Hülse eine Wandstärke von z.B. 1 mm. Der nach einschlägigen Empfehlungen zulässige Gesamtverschleiß liegt jedoch bei 2 mm. Wenn daher der Verschleiß bereits größer als 1 mm ist, kann der gebrauchte Königszapfen nicht mehr abgedreht und mit einer Hülse versehen werden; ein Aufarbeiten ist dann bei der genannten Wandstärke der Hülse nicht mehr möglich.

In beiden Fällen läßt sich mit relativ geringem Aufwand das gewünschte Ziel erreichen.

Bei einer Weiterbildung der Erfindung ist die Hülse auf ihrer äußeren Oberfläche mit einer Aufrauhung versehen.

Diese Maßnahme hat den Vorteil, daß zwischen der Hülse und dem Kupplungshaken bzw. dem Verschleißring eine größere Haftung bzw. Reibung eingestellt wird als zwischen der Hülse und dem innen befindlichen Körper des Königszapfens. Die Hülse dreht sich dann im wesentlichen auf dem Körper des Königszapfens, also überwiegend auf ihrer Innenseite, die geschützt und innen liegt und weniger auf ihrer frei liegenden Außenseite relativ zum Verschleißring und zum Kupplungshaken.

Hierzu ist besonders bevorzugt, wenn die Aufrauhung eine Rauhtiefe aufweist, die größer ist als die Dicke der thermischen Beschichtung.

Dann bleiben die Vorteile der mechanischen Stabilität der thermischen Beschichtung erhalten, obwohl auf der Außenseite der Hülse ein größerer Reibungskoeffizient eingestellt wird als auf der Innenseite.

Bei einer bevorzugten Weiterbildung der erfindungsgemäßen Kupplungsvorrichtung werden die inneren Oberflächen der Hülse ebenfalls durch eine abriebfeste thermische Beschichtung gebildet.

Diese Maßnahme hat den Vorteil, daß die gewünschten abriebfesten Gleitpaarungen bei demselben Beschichtungsvorgang gleichzeitig aufgebracht werden können.

Alternativ ist es aber auch möglich, die inneren Oberflächen der Hülse mit einer Wälzlageranordnung zu versehen.

Besonders bevorzugt ist weiterhin, wenn die thermische Beschichtung eine kohlenstoffbasierte Schicht, insbesondere eine Schicht aus im wesentlichen amorphem Kohlenstoff, ist.

Praktische Versuche haben gezeigt, daß diese Beschichtung vollständig den Anforderungen dieses Einsatzfalls genügt.

Bei Ausführungsbeispielen der erfindungsgemäßen Kupplungsvorrichtung ist die Hülse in Umfangsrichtung mehrschalig ausgebildet.

Diese Maßnahme hat den Vorteil, daß eine einfache Montage und ggf. auch Demontage der Hülse auf dem Königszapfen in einfacher Weise möglich ist. Dabei muß berücksichtigt werden, daß die nach DIN genormten Königszapfen einen axialen Bereich geringeren Durchmessers, also eine Einschnürung, aufweisen. Man kann daher eine Hülse nicht axial aufschieben sondern muß sie vielmehr im wesentlichen in radialer Richtung auf den Königszapfen aufsetzen.

Die Hülse wird bei einer Gruppe von Ausführungsbeispielen zweischalig ausgebildet.

Bei mehrschaligen Hülsen wird eine gute Wirkung erzielt, indem die Hülse an mindestens einem ihrer axialen Enden mit einer die Hülse zu ihren Enden hin verjüngenden Umfangsschräge versehen wird, wobei die Hülse axial mittels Gegenschrägen von Befestigungselementen gesichert ist.

Diese Maßnahme hat den Vorteil, daß ein radiales Auswandern oder gar Abfallen der Hülse unmöglich ist, da die Hülse in radialer Richtung formschlüssig gehalten wird.

Die Befestigungselemente können am freien Ende des Königszapfens als Deckel und am gegenüberliegenden Ende als Ring ausgebildet sein.

Bevorzugt ist dabei, wenn der Ring auf dem Königszapfen axial verschiebbar und axial am Königszapfen abgestützt ist, insbesondere mittels eines O-Ringes.

Diese Maßnahme hat den Vorteil, daß eine federnde Verspannung der Hülse in axialer Richtung möglich ist. Die Hülse kann sich daher nicht lockern, auch wenn sie einer ständigen Wechselbelastung ausgesetzt wird.

Bei einer weiteren Gruppe von Ausführungsbeispielen ist die Hülse in axialer Richtung mehrteilig ausgebildet.

Diese Maßnahme hat den Vorteil, daß die Montage der Hülse auf dem Körper vereinfacht wird, da diese lediglich axial aufgeschoben werden muß.

Bei diesen Ausführungsbeispielen ist weiter bevorzugt, wenn der Königszapfen einen axial mehrgeteilten Körper umfaßt, wobei ein am freien Ende des Königszapfens angeordnetes Unterteil abnehmbar ist und die mehreren Hülsen bei abgenommenem Unterteil auf ein Oberteil des Körpers aufschiebbar sind.

Diese Maßnahme hat den Vorteil, daß die Hülsen sowohl im durchmesserverminderten Bereich wie auch im oberen Bereich mit größerem Durchmesser axial aufgeschoben werden können.

Bei dem zuvor genannten Ausführungsbeispiel wird eine besonders gute Wirkung dadurch erzielt, daß das Unterteil in radialer Richtung formschlüssig im Oberteil gelagert ist.

Diese Maßnahme hat den Vorteil, daß eine zusätzliche Sicherung gegen eine Überbelastung infolge radial am Königszapfen angreifender Kräfte ermöglicht wird.

Dies gilt insbesondere dann, wenn das Unterteil über einen kegelstumpfförmigen Sitz im Oberteil gelagert ist.

Diese Maßnahme hat den Vorteil, daß die erwähnte erhöhte Festigkeit bei relativ einfachem Bau und daher kostengünstiger Herstellung möglich ist.

Bei den genannten Ausführungsbeispielen ist weiterhin bevorzugt, wenn das Unterteil mit dem Oberteil verschraubt ist. Besonders bevorzugt ist dabei, wenn das Unterteil mit dem Oberteil über einen axialen Gewindebolzen verschraubt ist.

Diese Maßnahme hat den Vorteil, daß eine einfache Montage des Königszapfens möglich ist, ohne daß sich daraus Nachteile für dessen Stabilität ergeben.

Bei dem erfindungsgemäßen Königszapfen können dessen mehrere Bestandteile auf unterschiedliche Art und Weise zusammengeschraubt werden.

Bei einer bevorzugten Weiterbildung dieser Variante ist der Gewindebolzen von einer vom Unterteil abgewandten Seite des Königszapfens durch das Oberteil gesteckt und an seinem freiem Ende mit dem Unterteil verschraubt.

Das freie Ende des Gewindebolzens greift dann bevorzugt in eine Gewindebohrung eines Unterteils am freien Ende des Königszapfens und zieht dieses gegen das Oberteil. Dies hat den Vorteil, daß am freien Ende des Königszapfens keine Schraubenköpfe oder dergleichen vorstehen oder durch entsprechende Einsenkungen eine Materialschwächung auftreten würde.

In diesem Falle ist weiter bevorzugt, wenn der Gewindebolzen konisch ausgebildet und in eine konische Durchgangsbohrung des Oberteils eingesteckt und dort verpreßt ist.

Diese Maßnahme hat den Vorteil, daß der Gewindebolzen zunächst durch axiales Einpressen fixiert wird und dann das Unterteil auf den Gewindeabschnitt des Gewindebolzens aufgeschraubt werden kann, der frei aus dem Oberteil vorsteht.

Bei weiteren Varianten dieser Gruppe von Ausführungsbeispielen weisen die Hülsen einen unterschiedlichen Durchmesser auf und liegen auf axial entgegengesetzten Seiten an einer auf den Körper aufgeschobenen, sich im wesentlichen radial erstreckenden Scheibe an.

Diese Maßnahme hat den Vorteil, daß die gesamte nach außen in Erscheinung tretende Oberfläche sowohl in ihren peripheren Bereichen wie auch in einer radialen Übergangsfläche aus extern montierten Bauelementen dargestellt wird. Demzufolge lassen sich an allen genannten Stellen optimale Oberflächeneigenschaften einstellen.

Weiterhin ist bevorzugt, wenn die Hülsen durch Verschrauben der mehreren Teile des Körpers axial gehalten werden.

Diese Maßnahme hat den Vorteil, daß mit einfachen konstruktiven Mitteln eine axiale Lagerung der Hülse erreicht wird.

Bevorzugt ist weiter, wenn die Hülse aus Hartmetall besteht. Sie wird bevorzugt auf ihren für die thermische Beschichtung vorgesehenen Oberflächen prägepoliert. Dies führt zu einer spiegelblanken Oberfläche, auf der die Beschichtung besonders gut haftet und bei der es nach der Beschichtung eine idealrotationssymmetrische Oberfläche gibt.

Bei einer bevorzugten Weiterbildung der Erfindung wird die Antifriktionsschicht als eine kohlenstoffbasierte Schicht ausgebildet.

Es hat sich gezeigt, daß kohlenstoffbasierte Schichten, d.h. Kohlenstoff enthaltende oder kurz Kohlenstoffschichten sich sowohl durch eine extrem hohe Beständigkeit gegen Fließen, durch eine extrem hohe Härte und dennoch durch eine äußerst geringe Reibung an Gegenkörpern aus beispielsweise Stahl auszeichnen. Die Verwendung einer Kohlenstoffschicht als Antifriktionsschicht auf den mit dem Königszapfen in Anlage kommenden Oberflächen des Verschleißringes und des Verschlußhakens eröffnet die Möglichkeit, auf den Einsatz von Schmiermitteln für den Königszapfen gänzlich zu verzichten. Gegenüber PTFE, das zwar gute Antihafteigenschaften besitzt, hat eine Kohlenstoffschicht den Vorteil, daß letztere selbst extrem hart ist und im Gegensatz zu einer PTFE-Beschichtung auf eine zusätzliche Hartstoffgrundschicht verzichtet werden kann. Es hat sich weiter als besonders vorteilhaft erwiesen, daß sich durch die Anlage des Stahlkörpers des Königszapfens an der Kohlenstoffschicht ein Teil der Kohlenstoffschicht auf den Stahlkörper überträgt, wodurch eine Trockenschmierung der Königszapfenlagerung bewirkt wird, die die Reibung zwischen Königszapfen und Verschlußhaken bzw. Verschleißring von selbst reduziert. Es wurde umgekehrt nicht beobachtet, daß sich Stahl des Königszapfens auf die Kohlenstoffschicht überträgt, was bedeutet, daß praktisch kein Verschleiß am Königszapfen auftritt, im Gegensatz zur Verwendung von Titaniumnitridbeschichtungen.

In einer bevorzugten Ausgestaltung ist die kohlenstoffbasierte Schicht amorpher Struktur.

Amorphe Kohlenstoffschichten als ein vorteilhaftes Beispiel für kohlenstoffbasierte Schichten besitzen hervorragende Trockenschmiereigenschaften, so daß auf jeglichen Schmiermitteleinsatz verzichtet werden kann, wodurch die Umweltverträglichkeit der Sattelkupplung stark verbessert ist. Durch die Eigenschaft, als Trockenschmiermittel zu wirken, stellt die amorphe Kohlenstoffschicht einen optimalen Verschleißschutz sowohl für den Königszapfen als auch für den Verschleißring und den Verschlußhaken dar, ohne dabei selbst einem Verschleiß zu unterliegen, da die amorphe Kohlenstoffschicht noch eine ausreichend hohe Härte aufweist. Die amorphe Kohlenstoffschicht ist dadurch in der Lage, der hohen Flächenpressung standzuhalten.

In einer weiteren bevorzugten Ausgestaltung ist die kohlenstoffbasierte Schicht eine reine Kohlenstoffschicht von diamantähnlicher Struktur.

Bei einer Schichtdicke von etwa 1 bis 10 µm weisen diamantähnliche Kohlenstoffschichten extrem hohe Härten von 3.000 HV auf, wobei sie neben dieser hohen Härte noch eine Elastizität besitzen, die in Kombination mit ihrer Härte zu einer sehr hohen Verschleißfestigkeit führt, so daß eine optimale Oberflächenvergütung des Verschleißringes und Verschlußhakens erzielt wird.

In einer weiteren bevorzugten Ausgestaltung ist zwischen der Kohlenstoffschicht und den Oberflächen eine Haftvermittlungsschicht angeordnet.

Durch diese Maßnahme wird insbesondere bei dünnen amorphen Kohlenstoffschichten die Haftung der Kohlenstoffschicht auf den Stahlkörper des Verschleißringes sowie des Verschlußhakens vorteilhaft erhöht. Die Haftschichten können allgemein aus gesputterten Metallen wie Aluminium, Titan oder Chrom bestehen.

Weiterhin ist es bevorzugt, wenn die Kohlenstoffschicht metallhaltig ist.

Durch die Beimengung von Metallen kann auf vorteilhafte Weise die Haftung von amorphen Kohlenstoffschichten anstelle durch die Verwendung einer zusätzlichen Haftschicht verbessert werden, wobei ein weiterer Vorteil darin besteht, daß sich metallhaltige Kohlenstoffschichten mit einer höheren Beschichtungsrate in Sputterverfahren auftragen lassen. Als Metalle können ebenfalls Aluminium, Titan oder Chrom verwendet werden.

Weiterhin ist es bevorzugt, wenn die Kohlenstoffschicht in einem Schichtabscheidungsverfahren, insbesondere einem PECVD-Verfahren, aufgebracht wird.

Durch derartige Verfahren läßt sich die Kohlenstoffschicht einerseits in für deren Härte besonders günstigen Dicken von wenigen µm auftragen, andererseits wird eine gute Verbindung zwischen der Kohlenstoffschicht und dem Stahlkörper des Verschlußhakens bzw. des Verschleißringes hergestellt.

Die Kohlenstoffschicht weist bevorzugt eine Dicke von etwa 1 bis 20 µm auf.

Wie bereits erwähnt, besitzen Kohlenstoffschichten bei einer solchen Dicke eine sehr hohe Härte sowie eine ausreichende Elastizität, die bei deren Einsatz für eine verschleißfreie Kupplung optimal sind.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der beigefügten Zeichnung dargestellt und wird in der nachfolgenden Beschreibung näher erläutert. Es zeigen:
- Fig. 1: eine perspektivische Ansicht, von unten, auf eine Königszapfen-Anordnung;
- Fig. 2: eine Seitenansicht des Königszapfens gemäß Fig. 1, in vergrößertem Maßstab und im Halbschnitt;
- Fig. 3: eine Ansicht, ähnlich Fig. 2, jedoch für ein abgewandeltes Ausführungsbeispiel;
- Fig. 4: eine weitere Ansicht, ähnlich Fig. 3, jedoch für ein weiter abgewandeltes Ausführungsbeispiel;
- Fig. 5: einen Kupplungssattel einer Sattelkupplung mit einem dazugehörigen demontierten Verschlußhaken in perspektivischer Explosionsdarstellung;
- Fig. 6: eine Draufsicht auf einen Verschleißring des Kupplungssattels;
- Fig. 7: einen Schnitt entlang der Linie III-III aus Fig. 6;
- Fig. 8: eine Draufsicht auf den Verschlußhaken; und
- Fig. 9: einen Schnitt entlang der Linie V-V aus Fig. 8.

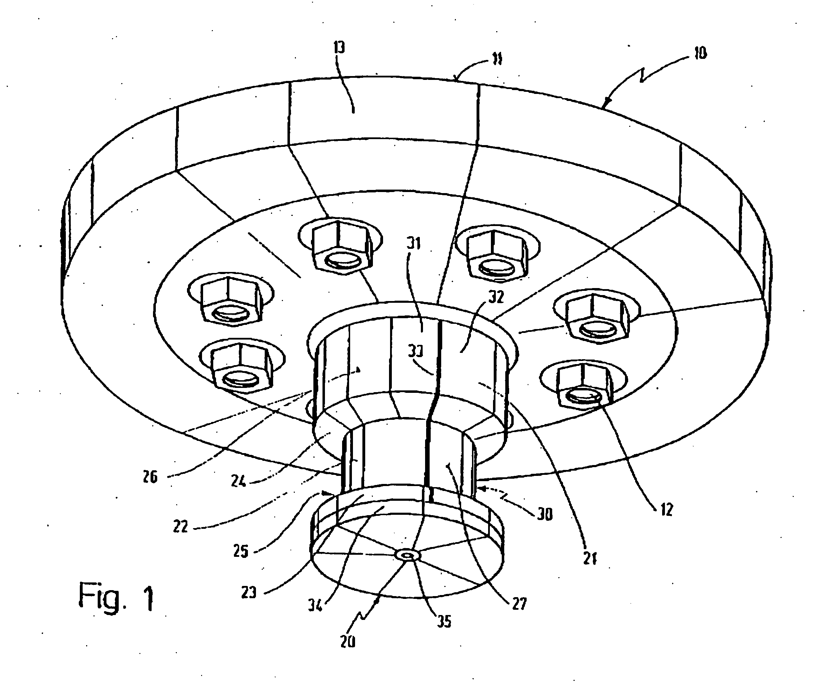

In Fig. 1 bezeichnet 10 als Ganzes eine Königszapfen-Anordnung. Die Anordnung 10 wird mit ihrer in Fig. 1 nicht sichtbaren Oberseite an der Unterseite eines Auflieger-Anhängers befestigt, und zwar bspw. mit Schrauben 12, die durch einen Ringflansch 13 der Anordnung 10 hindurchreichen.

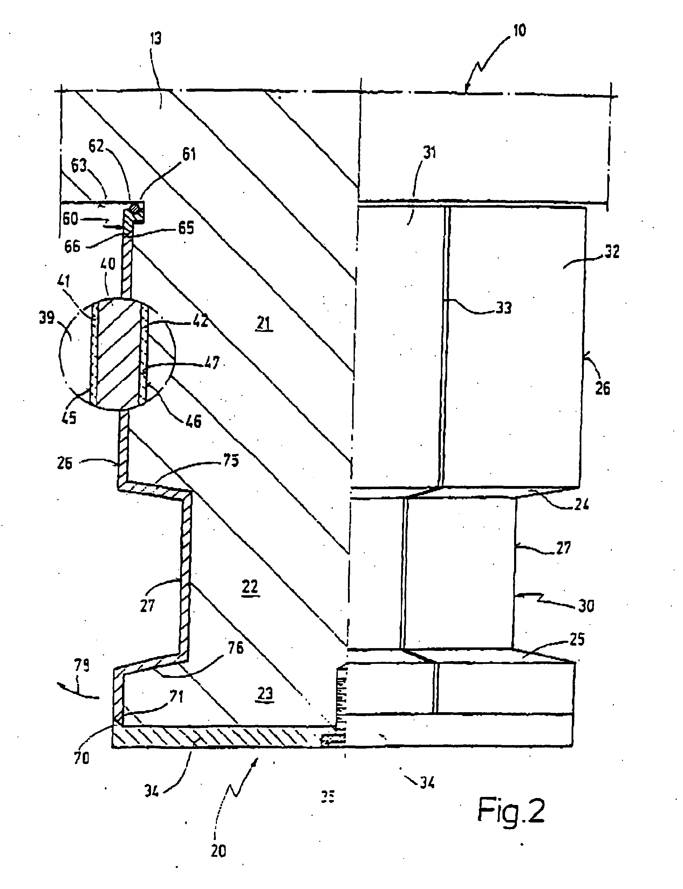

Von der Unterseite des Flansches 13 erstreckt sich nach unten ein Königszapfen 20. Der Königszapfen 20 hat einen oberen Abschnitt 21, einen mittleren Abschnitt 22 sowie einen unteren Abschnitt 23. Der obere und der untere Abschnitt 21, 23 haben denselben Außendurchmesser, während der mittlere Abschnitt 22 einen geringeren Durchmesser aufweist. Die Abschnitte 21, 22, 23 sind über konische Übergänge 24, 25 miteinander verbunden (vgl. auch Fig. 2).

Die Abmessungen des Königszapfens 20 sind genormt. In der Bundesrepublik Deutschland ist die Norm DIN 74-080 einschlägig.

Der Königszapfen 20 ist an seiner Oberfläche mit einer Hülse 30 versehen, die die gesamte Umfangsfläche des Königszapfens 20 überdeckt.

Die Hülse 30 ist in Axialrichtung zweigeteilt und besteht aus einer ersten Halbschale 31 sowie einer zweiten Halbschale 32, die jeweils etwa 180 des Umfanges des Königszapfens 20 überdecken. Sie sind über eine Naht 33 voneinander getrennt.

Am freien Ende des Königszapfens 20 wird die zweischalige Hülse 30 mittels eines Deckels 34 gehalten, der auf den unteren Abschnitt 23 mittels einer axialen Schraube 35 aufgeschraubt ist.

Aus Fig. 2 ergeben sich weitere Einzelheiten der Anordnung.

Man erkennt im Halbschnitt auf der linken Seite von Fig. 2, daß die linke Halbschale 31 der Hülse 30 einstückig ist. Wie der vergrößerte Ausschnitt 39 zeigt, ist eine Wand 40 der Hülse 30 mit einer äußeren Schicht 41 sowie einer inneren Schicht 42 versehen. Die Schichten 41 bzw. 42 bilden damit eine äußere Oberfläche 45 bzw. eine innere Oberfläche 46 der Hülse 30.

Die äußere Oberfläche 45 ist damit die äußere Oberfläche des Königszapfens 20, während die innere Oberfläche 46 auf einer Gegenfläche 47 des Königszapfen-Körpers aufliegt.
Die Hülse 30 stellt damit eine schwimmende Lagerung dar, weil sie einerseits entlang der Gleitpaarung der Oberflächen 46/47 auf dem Königszapfen 20 selbstdrehbar ist, andererseits mit ihrer äußeren Oberfläche 45 eine Eingriffsfläche für die Schloßelemente der Sattelkupplung darstellt.

Die Hülse 30 ist auf dem Königszapfen 20 axial elastisch verspannt.

Im Übergang des Königszapfens 20 zum Flansch 13 ist zu diesem Zweck ein Ring 60 vorgesehen. Der Ring 60 ist geringfügig in axialer Richtung auf dem Königszapfen 20 verschiebbar, wie mit einer Lagerung 61 angedeutet. Zwischen dem Ring 60 und einer radialen Fläche 63 des Flansches 13 liegt ein O-Ring 62, der in Axialrichtung elastisch wirkt.

Die Hülse 30 ist an ihrem in Fig. 2 oberen Ende mit einer Schräge 65 versehen, mit der sich die Hülse 30 zu ihrem freien Ende hin verjüngt. Der Kegelwinkel der Schräge 65 kann z.B. 45 betragen.

Der Ring 60 ist demgegenüber mit einer komplementären Gegenschräge 66 versehen, an die sich die Schräge 65 formschlüssig anlegt.

In entsprechender Weise ist am unteren freien Ende der Hülse 30 eine Schräge 71 vorgesehen, die formschlüssig an einem komplementär geformten Kragen 70 am Außenumfang des Deckels 34 anliegt.

Wenn nun der Deckel 34 mittels der axialen Schrauben 35 aufgeschraubt wird, wird die Hülse 30 mit ihren Schrägen 65, 71 axial verspannt und formschlüssig gehalten.
Die Anordnung ist dabei so getroffen, daß die Hülse 30 auf dem Königszapfen 10 leicht montiert und demontiert werden kann. Hierzu sind Schrägen 75, 76 im Bereich der Übergänge 24, 25 z.B. mit dem maximal zulässigen Kegelwinkel von 6 ausgeführt. Dann kann z.B. nach Demontage des Deckels 34 die linke Halbschale 31 nach außen weggekippt werden, wie mit einem Pfeil 78 in Fig. 2 angedeutet.

Wenn die in Fig. 2 dargestellte Anordnung für eine neu hergestellte Kupplungsvorrichtung eingesetzt wird, muß der Königszapfen 20 gegenüber den genormten Werten mit seinen Durchmessern so dimensioniert werden, daß nach dem Aufsetzen der Hülse 30 die äußere Formgebung den Normmaßen entspricht.

Wenn demgegenüber der Umbau einer bereits gebrauchten Kupplungsvorrichtung geplant ist, muß der Königszapfen an seinem Umfang so weit abgedreht werden, wie dies der Wandstärke der Hülse 30 entspricht.

Die Schichten 41, 42 auf beiden Seiten der Wand 40 der Hülse 30 werden vorzugsweise durch thermisches Beschichten aufgebracht. Besonders bevorzugt ist das Aufbringen einer kohlenstoffbasierten Schicht, insbesondere einer Schicht, die im wesentlichen aus amorphem Kohlenstoff besteht. Derartige Schichten werden in einem sogenannten Schichtabscheidungsverfahren, insbesondere einem PECVD-Verfahren, aufgebracht. Die Dicke der Schichten 41, 42 liegt z.B. zwischen 1 und 20 µm. Es entstehen dann diamantähnliche Kohlenstoffschichten extrem hoher Härten von 3.000 HV, wobei diese Schichten neben dieser hohen Härte noch eine Elastizität besitzen. Dies führt in Kombination mit ihrer Härte zu einer sehr hohen Verschleißfestigkeit, sowohl beim Einkuppeln als auch beim normalen Fahrbetrieb.

Es versteht sich, daß zur Verbesserung der Haftung der Schichten 41, 42 noch entsprechende Haftschichten vorgesehen werden können, die im allgemeinen aus gesputterten metallischen Schichten bestehen, bspw. aus Aluminium, Titan oder Chrom oder Legierungen davon.

Um besonders gute Gleitpaarungen zu erzielen und um die Haftung der Schichten 41, 42 auf der Wand 40 der Hülse 30 zu verbessern, wird die Oberfläche der Hülse 30 vorzugsweise vor dem Aufbringen der Schichten prägepoliert. Beim Prägepolieren wird die Hülse 30 in eine Drehvorrichtung eingespannt und in radialer Richtung mit einer polierten Diamantkugel beaufschlagt, die mit sehr geringem axialen Vorschub bei rotierender Hülse an deren Oberfläche entlang verfahren wird. Dabei entsteht ein Verdrängungsprozeß von Werkstoff an der Oberfläche der Hülse 30, und es entsteht letztendlich eine nahezu spiegelnde Oberfläche.

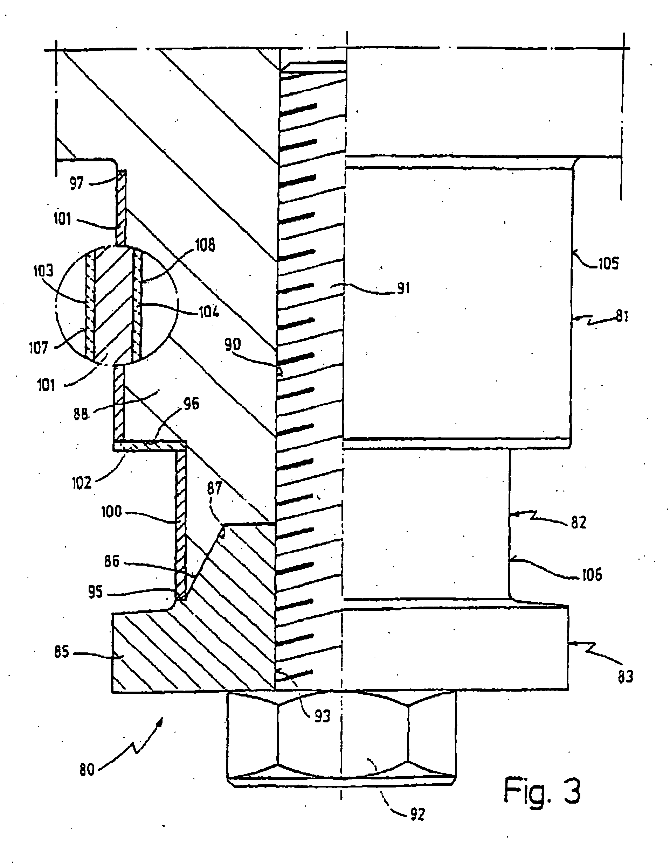

In Fig. 3 ist eine Variante zum Ausführungsbeispiel gemäß Fig. 2 dargestellt.

Ein Königszapfen 80 weist wiederum einen oberen Abschnitt 81, einen mittleren Abschnitt 82 sowie einen unteren Abschnitt 83 auf. Die äußere Formgebung des Königszapfens 80 entspricht damit im wesentlichen derjenigen des Königszapfens 20 gemäß Fig. 1 und 2.

Im Gegensatz zu dem vorgenannten Ausführungsbeispiel weist der Körper des Königszapfens 80 jedoch ein separates Unterteil 85 auf, das über eine kegelstumpfförmige Passung 86/87 mit einem Oberteil 88 des Königszapfens 80 verbunden ist.

Zum Verbinden des Unterteils 85 mit dem Oberteil 88 ist eine Gewindebohrung 90 im Oberteil 88 vorgesehen. Ein Gewindebolzen 91 mit einem Kopf 92 ist durch eine mit der Gewindebohrung 90 fluchtende Durchgangsbohrung 93 im Kopf 92 hindurchgesteckt und in die Gewindebohrung 90 eingedreht. Auf diese Weise ist das Unterteil 85 mit dem Oberteil 88 axial verschraubt. Die formschlüssige Verbindung im Bereich der Passung 86/87 ergibt eine höhere Festigkeit gegenüber radialen Beanspruchungen am freien Ende des Königszapfens 80.

Am Fuße der Passung 86 des Unterteils 85 ist eine erste radiale Umfangsschulter 95 vorgesehen. Eine zweite radiale Umfangsschulter 96 befindet sich an dem in Fig. 3 oberen Ende des mittleren Abschnitts 82 am Oberteil 88. Schließlich ist eine dritte radiale Umfangsschulter 97 an dem in Fig. 3 oberen Ende des oberen Abschnitts 81, wiederum am Oberteil 88, vorgesehen.

Der Königszapfen 80 ist mit einer ersten Hülse 100 sowie einer zweiten Hülse 101 und einem dazwischen liegenden, im wesentlichen in einer Radialebene liegenden Ring 102 versehen.

Die erste Hülse 100 stützt sich unten auf der ersten radialen Umfangsschulter 95 und oben am Ring 102 ab. Der Ring 102 liegt wiederum auf der zweiten radialen Umfangsschulter 96 auf.

Die zweite Hülse 101 liegt unten auf der Oberseite des insoweit über das Oberteil 88 vorstehenden Ringes 102 auf und liegt ferner oben an der dritten radialen Umfangsschulter 97 an.

Die Anordnung ist in Fig. 3 so getroffen, daß durch das Verschrauben von Unterteil 85 und Oberteil 88 die Hülsen 100, 101 und der Ring 102 nicht miteinander in axialer Richtung verspannt werden. Vielmehr ist die Anordnung mit etwas Spiel so getroffen, daß sich die Hülsen 100, 101 auf den entsprechenden Umfangsabschnitten des Oberteils 88 im Bereich des oberen Abschnitts 81 bzw. des mittleren Abschnitts 82 frei drehen können.

Die Hülsen 100, 101 bilden mit ihren Oberflächen 105, 106 die zu den Oberflächen 26, 27 beim Ausführungsbeispiel gemäß Fig. 1 und 2 korrespondierenden Laufflächen.

Oben links in Fig. 3 ist in weiter vergrößertem Maßstab ausschnittsweise noch eingezeichnet, daß eine äußere Schicht 103 sowie eine innere Schicht 104 auf beiden Seiten der zweiten Hülse 101 (und in entsprechender Weise natürlich auch auf der ersten Hülse 100) vorgesehen sind. Die äußere Oberfläche der äußeren Schicht 103 ist dabei mit 107 und die innere Oberfläche der inneren Schicht 104 mit 108 bezeichnet.

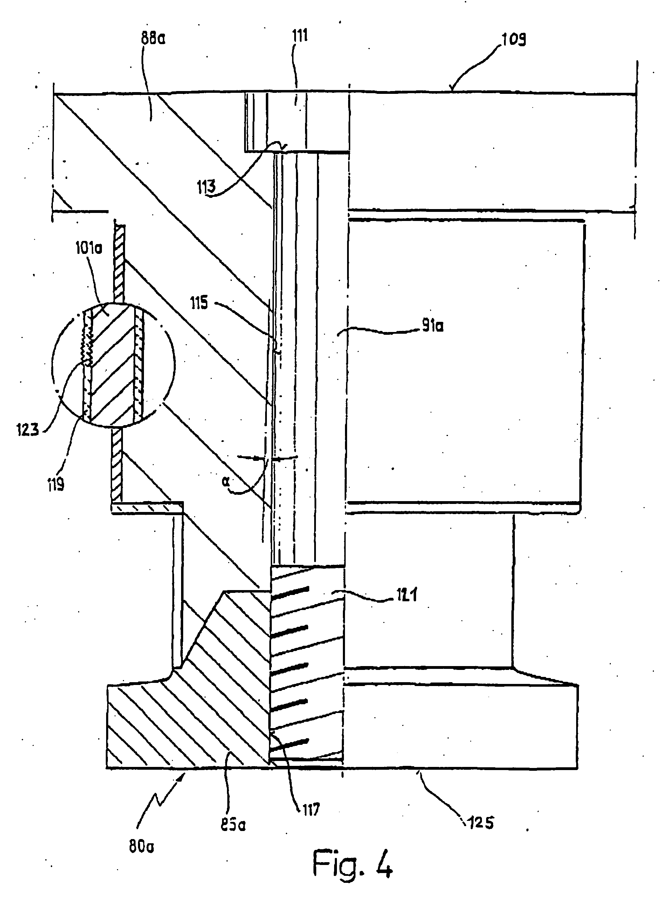

Zur Herstellung des Königszapfens 80 gemäß Fig. 3 (und sinn-gemäß auch gemäß Fig. 2 und 4) geht man folgendermaßen vor:
Bei einer Neuherstellung des Königszapfens 80 werden das Oberteil 88 sowie das Unterteil 85 separat gefertigt. Zur Montage des Königszapfens 80 wird zunächst die zweite Hülse 101, dann der Ring 102 und schließlich die erste Hülse 100 von unten auf das Oberteil 88 aufgeschoben. Alsdann wird das Unterteil 85 aufgesetzt und mittels des Gewindebolzens 91 verschraubt.

Beim Aufarbeiten eines bereits vorhandenen Königszapfens herkömmlicher Bauart wird dieser an seinem Umfang so abgedreht, daß er einen Durchmesser erhält, der dem Normdurchmesser abzüglich der doppelten Wandstärke der Hülsen 100, 101 entspricht. Ein Aufarbeiten eines teilweise verschlissenen Königszapfens ist naturgemäß nur dann möglich, wenn der bereits vorhandene Verschleiß geringer ist als die Wandstärke der später aufzusetzenden Hülse. Da der nach einschlägigen Empfehlungen zulässige Gesamtverschleiß bei 2 mm liegt, kann z.B. ein Königszapfen dann nicht mehr aufgearbeitet werden, wenn der Verschleiß bereits z.B. 1,8 mm beträgt, die Wandstärke der vorgesehenen Hülse aber nur 1 mm ist.

Am freien Ende wird der Königszapfen dann verkürzt und mit einer z.B. kegelstumpfförmigen Eindrehung entsprechend der Passung 87 versehen. Schließlich wird der Königszapfen 80 noch mit der zentralen Gewindebohrung 90 versehen.

Auf den so bearbeiteten Königszapfen werden nun die Elemente 102, 101, 100 aufgeschoben und durch Aufschrauben eines separat beigestellten Unterteils 85 axial gesichert, wie bereits beschrieben.

Fig. 4 zeigt noch eine weitere Variante mit einigen Abweichungen gegenüber dem in Fig. 3 dargestellten Ausführungsbeispiel.

Bei dem Königszapfen 80a in Fig. 4 wird der Gewindebolzen 91a von einer Oberseite 109 des Königszapfens 80a eingesteckt.

Zu diesem Zweck wird ein Kopf 111 eines leicht konischen Gewindebolzens 91a in eine entsprechende Einsenkung 113 in der Oberseite 109 eingesetzt. Das Oberteil 88a des Königszapfens 80a ist mit einer entsprechend leicht konischen Durchgangsbohrung 115 versehen, wie mit einem Winkel α von z.B. 1 angedeutet. Ein Gewindeabschnitt 121 am freien Ende des Gewindebolzens 91a greift demgegenüber in eine Gewindebohrung 117 im Unterteil 85a des Königszapfens 80a ein.

Der Gewindebolzen 91a wird hierzu nach dem Einstecken in die konische Durchgangsbohrung 115 axial verpreßt und das Unterteil 85a dann aufgeschraubt.

Auf diese Weise wird das Material des Unterteils 85a nur in einem geringstmöglichen Umfange geschwächt, und man erhält eine ebene Unterseite 125 des Unterteils 85a.

Die Anordnung der Hülsen und des Ringes ist gegenüber derjenigen von Fig. 3 unverändert, so daß insoweit auf die Beschreibung zu Fig. 3 verwiesen werden kann.

Eine Besonderheit kann noch durch Maßnahmen erreicht werden, wie sie in Fig. 4 oben links in weiter vergrößertem Ausschnitt dargestellt sind:

Man erkennt, daß die äußere Oberfläche 119 der Hülse 101a mit einer Aufrauhung 123 versehen ist, während die innere Oberfläche glatt ausgeführt ist.

Die Rauhtiefe der Aufrauhung 123 ist dabei vorzugsweise so bemessen, daß die Aufrauhung auch auf der äußeren Oberfläche der thermischen Beschichtung wirksam ist. Hierzu wird die Rauhtiefe bspw. größer bemessen als die Dicke der thermischen Beschichtung.

Der Sinn dieser Maßnahme ist, die Hülse auf ihrer Außenseite mit einem höheren Reibungskoeffizienten zu versehen als auf ihrer Innenseite. Hierdurch wird erreicht, daß die Hülse sich vorzugsweise auf der inneren Oberfläche relativ zum Körper des Königszapfens dreht, während sie auf ihrer Außenfläche, ohne sich zu drehen, am Verschleißring bzw. am Kupplungshaken anliegt.

Bei den Ausführungsbeispielen gemäß Fig. 3 und 4 besteht das Unterteil 85, 85a, insbesondere dessen konischer Dorn im Bereich der Passung 86/87 aus einem sehr hochwertigen Material. Er wird vorzugsweise beim Montieren des Königszapfens 80a mittels einer Presse bis zum oberen Anschlag verpreßt und so angepreßt, daß das umgebende Material des Oberteils 88, 88a im Bereich der Passung 86/87 gespannt wird.

Beim Ausführungsbeispiel gemäß Fig. 4 hat der Gewindebolzen 91a an seinem unteren Ende ein preßgerolltes Gewinde im Bereich des Gewindeabschnitts 116.

Die Hülse 30 bzw. 100, 101 selbst wird vorzugsweise aus einem Hartmetall hergestellt.

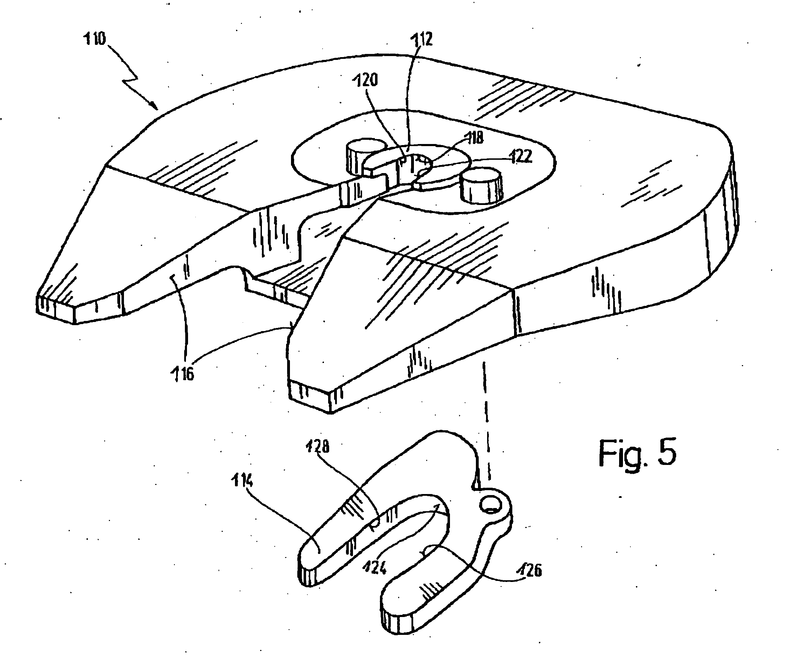

In Fig. 5 ist ein mit dem allgemeinen Bezugszeichen 110 bezeichneter Kupplungssattel dargestellt, der Teil einer Sattelkupplung zur Verbindung einer hier nicht dargestellen Sattelzugmaschine mit einem nicht dargestellten Sattelzuganhänger ist. Der Kupplungssattel 110 ist an der Oberseite des rückwärtigen Endes der Zugmaschine befestigt.

Der Kupplungssattel 110 weist einen hufeisenförmigen, von dem Kupplungssattel 110 demontierbaren Verschleißring 112 sowie einen Verschlußhaken 114 auf, der in Fig. 5 der Übersichtlichkeit halber getrennt von dem Kupplungssattel 110 dargestellt ist. Der Verschlußhaken 114 ist normalerweise verschwenkbar an dem Kupplungssattel 110 befestigt.

Der Kupplungssattel 110 öffnet sich in rückwärtiger Richtung mit einem Maul 116, an dessen Grund der Verschleißring 112 angeordnet ist. Der Verschleißring weist eine zylinderabschnittförmige Oberfläche 118 als Anlagefläche für einen hier nicht dargestellten Königszapfen auf, der wiederum Bestandteil des Sattelzuganhängers ist. Die als Anlagefläche dienende Oberfläche 118 reicht etwa bis zu Flächenendabschnitten 120 und 122, so daß die Oberfläche 118 des Verschleißringes 112 den Königszapfen halbkreisförmig umschließt. Entsprechend weist der Verschlußhaken 114 eine als Anlagefläche für den übrigen Umfang des Königszapfens ausgebildete Oberfläche 120 auf, die bis zu entsprechenden Flächenendabschnitten 124 und 126 reicht.

Zum Verbinden des Anhängers mit der Zugmaschine wird der Königszapfen in das Maul 116 des Kupplungssattels 110 eingefahren, bis er an der Oberfläche 118 des Verschleißringes 112 anliegt. Darauf wird der verschwenkbar an entsprechender Stelle des Kupplungssattels 110 befestigte Verschlußhaken 114 so verschwenkt, daß er zusammen mit dem Verschleißring 112 den Königszapfen umschließt. Die Oberfläche 120 des Verschlußhakens 114 und die Oberfläche 118 des Verschleißringes 112 bilden komplementär zueinander gemeinsam eine kreisringförmige Lagerung des Königszapfens, der in dieser Lagerung formschlüssig und drehbar aufgenommen ist.

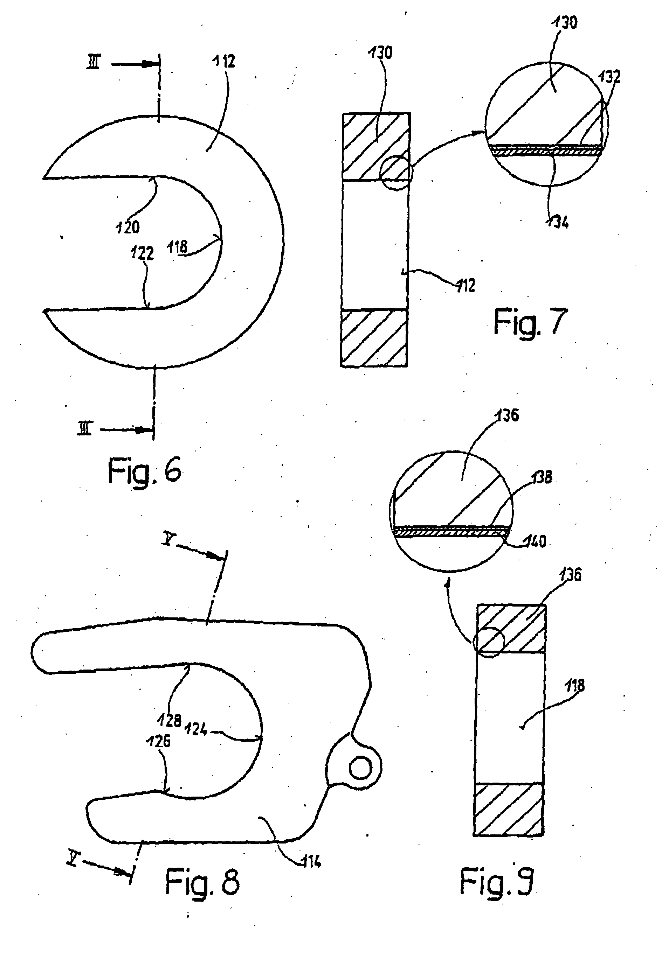

In Fig. 6 bis Fig. 9 sind der Verschleißring 112 sowie der Verschlußhaken 114 näher dargestellt.

Der Verschleißring 112 besteht aus einem Grundmaterial 130, üblicherweise einem Werkzeugstahl. Auf dem Grundmaterial 130 ist eine Haftschicht 132 aus einem Metall, bspw. Titan, in einer Stärke von etwa 1 µm aufgesputtert. Auf der Haftvermittlungsschicht 132 ist eine kohlenstoffbasierte Schicht 134 von einer Dicke von etwa 10 µm in einem Schichtabscheidungsverfahren, bspw. einem PECVD-Verfahren (Plasma Enhanced Chemical Vapor Deposition), abgeschieden worden. Unter kohlenstoffbasierten Schichten werden reine Kohlenstoffschichten mit diamantähnlicher Struktur, metallhaltige Kohlenstoffschichten oder amorphe Kohlenstoffschichten, die entweder rein oder metallhaltig sind, verstanden.

Die Haftvermittlungsschicht 132 und die kohlenstoffbasierte Schicht 134 sind auf der gesamten Oberfläche 118 zwischen den Flächenendabschnitten 120 und 122 vorgesehen.

Bei der Verwendung metallhaltiger Kohlenstoffschichten kann die Haftvermittlungsschicht 132 auch weggelassen werden.

Entsprechend ist auf einem Grundmaterial 136 des Verschlußhakens 114 eine Haftschicht 138 sowie eine kohlenstoffbasierte Schicht 140, ebenfalls von einer Dicke von etwa 10 µm, abgeschieden worden.

## Patentansprüche

1. Kupplungsvorrichtung zum Verbinden eines Zugfahrzeuges mit einem Auflieger-Anhänger, bei der an dem Anhänger ein Königszapfen (20; 80) und an dem Zugfahrzeug eine Sattelkupplung mit Schloßelementen zum formschlüssigen und drehbaren Ergreifen von im wesentlichen rotationssymmetrischen Oberflächen (26, 27; 105, 106) des Königszapfens (20; 80) angeordnet sind, wobei die Oberflächen (26, 27; 105, 106) durch eine abriebfeste thermische Beschichtung (41, 42; 103, 104) gebildet werden, **dadurch gekennzeichnet, daß** die Oberflächen (26, 27; 105, 106) durch äußere Oberflächen (45; 107) einer auf dem Königszapfen (20; 80) sitzenden und thermisch beschichteten Hülse (30; 100, 101) gebildet werden, wobei die Hülse (30; 100, 101) mit inneren Oberflächen (46; 108) drehbar auf dem Königszapfen (20; 80) angeordnet ist.

2. Kupplungsvorrichtung nach Anspruch 1, **dadurch gekennzeichnet, daß** die Hülse (101a) auf ihrer äußeren Oberfläche (119) mit einer Aufrauhung (120) versehen ist, deren Rauhtiefe vorzugsweise größer ist als die Dicke der thermischen Beschichtung.

3. Kupplungsvorrichtung nach Anspruch 1 oder 2, **dadurch gekennzeichnet, daß** die inneren Oberflächen (46; 108) ebenfalls durch eine abriebfeste thermische Beschichtung gebildet werden.

4. Kupplungsvorrichtung nach einem oder mehreren der Ansprüche 1 bis 3, **dadurch gekennzeichnet, daß** die thermische Beschichtung eine kohlenstoffbasierte Schicht ist, insbesondere eine Schicht aus im wesentlichen amorphem Kohlenstoff ist.

5. Kupplungsvorrichtung nach einem oder mehreren der Ansprüche 1 bis 4, **dadurch gekennzeichnet, daß** die Hülse (30) in Umfangsrichtung mehrschalig, insbesondere zweischalig ausgebildet ist.

6. Kupplungsvorrichtung nach einem oder mehreren der Ansprüche 1 bis 4, **dadurch gekennzeichnet, daß** die Hülse (100, 101) in axialer Richtung mehrteilig ausgebildet ist.

7. Kupplungsvorrichtung nach Anspruch 6, **dadurch gekennzeichnet, daß** der Königszapfen (80) einen axial mehrgeteilten Körper (85, 88) umfaßt, wobei ein am freien Ende des Königszapfens angeordnetes Unterteil (85) abnehmbar ist und die mehreren Hülsen (100, 101) bei abgenommenem Unterteil auf ein Oberteil (88) des Körpers (85, 88) aufschiebbar sind.

8. Kupplungsvorrichtung nach einem oder mehreren der Ansprüche 1 bis 7, **dadurch gekennzeichnet, daß** die Hülsen (100, 101) einen unterschiedlichen Durchmesser aufweisen und auf axial entgegengesetzten Seiten an einer auf den Körper (85, 88) aufgeschobenen, sich im wesentlichen radial erstreckenden Scheibe (102) anliegen.

9. Kupplungsvorrichtung nach Anspruch 7 oder 8, **dadurch gekennzeichnet, daß** die Hülsen (100, 101) durch Verschrauben der mehreren Teile des Körpers (85, 88) axial gehalten werden.

10. Kupplungsvorrichtung nach einem oder mehreren der Ansprüche 1 bis 9, mit einem an dem Zugfahrzeug befestigten Kupplungssattel (110), der einen mit einem Königszapfen des Sattelanhängers zusammenwirkenden Verschleißring (112) und einen Verschlußhaken (114) aufweist, wobei mit dem Königszapfen in Anlage kommende Oberflächen (118, 124) des Verschleißringes (112) und des Verschlußhakens (114) eine Antifriktionsschicht aufweisen, **dadurch gekennzeichnet, daß** die Antifriktionsschicht eine kohlenstoffbasierte Schicht (134, 140) ist.

11. Verfahren zum Umbauen von Kupplungsvorrichtungen für das Verbinden eines Zugfahrzeuges mit einem Auflieger-Anhänger, bei denen an dem Anhänger ein Königszapfen (20; 80) und an dem Zugfahrzeug eine Sattelkupplung mit Schloßelementen zum formschlüssigen und drehbaren Ergreifen von im wesentlichen rotationssymmetrischen Oberflächen des Königszapfens (20; 80) angeordnet sind, in einen Zustand, in dem ein schmiermittelfreier und damit wartungsfreier Betrieb der Kupplungsvorrichtung möglich ist, mit den Schritten:
a) Abdrehen der Oberflächen des Königszapfens (20; 80) um ein vorbestimmtes Aufmaß;
b) Herstellen einer Hülse (30; 100, 101) zum Aufsetzen auf den abgedrehten Königszapfen (20; 80), wobei die Wandstärke der Hülse (30; 100, 101) im wesentlichen gleich dem Aufmaß ist;
c) Thermisches Beschichten mindestens der äußeren Oberfläche der Hülse (30; 100, 101) mit einer abriebfesten Beschichtung (41; 103); und
d) Aufsetzen der Hülse (30; 100, 101) auf den abgedrehten Königszapfen (20; 80), derart, daß die Hülse (30; 100, 101) auf dem Königszapfen (20; 80) drehbar ist.

12. Verfahren nach Anspruch 11, **dadurch gekennzeichnet, daß** der Königszapfen (80) zweigeteilt wird, derart, daß ein am freien Ende des Königszapfens (80) angeordnetes Unterteil (85) abnehmbar ist und daß die Hülse (100, 101) bei abgenommenem Unterteil (85) auf ein Oberteil (88) des Königszapfens (80) aufgeschoben wird, wobei vorzugsweise das Unterteil (85) nach dem Aufschieben der Hülse (100, 101) mit dem Oberteil (88) axial verschraubt und die Hülse (100, 101) damit axial gehalten wird.

## Claims

1. A coupling device for connecting a towing vehicle to a semi-trailer, in which a kingpin (20; 80) is arranged on the trailer and a tractor coupling on the towing vehicle, said tractor coupling having locking elements for positive and rotatable engaging substantially rotationally symmetrical surfaces (26, 27; 105, 106) of the kingpin (20; 80), the surfaces (26, 27; 105, 106) being formed by an abrasion-resistant thermal coating (41, 42; 103, 104), **characterized in that** the surfaces (26, 27; 105, 106) are configurated by outer surfaces (45, 107) of a thermally coated sleeve (30; 100, 101) sitting on the kingpin (20; 80), the sleeve (30; 100, 101), with inner surfaces (46; 108), being rotatably arranged on the kingpin (20; 80).

2. The coupling device of claim 1, **characterized in that** the sleeve (101a) is provided with a roughening (120) on its outer surface (119), the roughening (120) having a surface roughness being greater than the thickness of the thermal coating.

3. The coupling device of claim 1 or 2, **characterized in that** the inner surfaces (46; 108) are likewise configurated by an abrasion-resistant thermal coating.

4. The coupling device of one or more of claims 1 through 3, **characterized in that** the thermal coating is a carbon-based layer, in particular a layer made of substantially amorphous carbon.

5. The coupling device of one or more of claims 1 through 4, **characterized in that** the sleeve (30) is of multi-shelled configuration in the circumferential direction.

6. The coupling device of one or more of claims 1 through 5, **characterized in that** the sleeve (100, 101) is of multi-part configuration in the axial direction.

7. The coupling device of claim 6, **characterized in that** the kingpin (80) comprises an axially multi-part body (85, 88), a lower part (85) arranged at the free end of the kingpin being removable, and the several sleeves (100, 101) being slidable, when the lower part has been removed, onto an upper part (88) of the body (85, 88).

8. The coupling device of one or more of claims 1 through 7, **characterized in that** the sleeves (100, 101) have a different diameter and rest, on axially opposite sides, against a disk (102) which is slid onto the body (85, 88) and extends substantially radially.

9. The coupling device of claims 7 or 8, **characterized in that** the sleeves (100, 101) are retained axially by thread-joining of the several parts of the body (85, 88).

10. A coupling device as defined in one or more of claims 1 through 9, comprising a coupling plate (110), attached to the towing vehicle, which has a wear ring (112) coacting with a kingpin of the semi-trailer as well as a locking hook (114), surfaces (118, 124) of the wear ring (112) and of the locking hook (114) which come into contact with the kingpin having an anti-friction layer, **characterized in that** the anti-friction layer is a carbon-based layer (134, 140).

11. A method for converting coupling devices for connecting a towing vehicle to a semi-trailer, in which a kingpin (20; 80) is arranged on the trailer and a tractor coupling on the towing vehicle, said tractor coupling having locking elements for positive and rotatable engaging substantially rotationally symmetrical surfaces of the kingpin (20; 80), into a state in which lubricant-free and thus maintenance-free operation of the coupling device is possible, comprising the steps:
a) lathe-turning the surfaces of the kingpin (20; 80) off by a predefined overmeasure;
b) manufacturing a sleeve (30; 100, 101) for placement on the turned-off kingpin (20; 80), the will thickness of the sleeve (30; 100, 101) being substantially identical to the overmeasure;
c) thermally coating at least the outer surface of the sleeve (30; 100, 101) with an abrasion-resistant coating (41, 103); and
d) placing the sleeve (30; 100, 101) onto the turned-off kingpin (20; 80) in such a way that the sleeve (30; 100, 101) is rotatable on the kingpin (20; 80).

12. The method of claim 11, **characterized in that** the kingpin (80) consists of two parts such that a lower part (85) arranged at the free end of the kingpin (80) is removable; and the sleeve (100, 101), when the lower part (85) has been removed, is slid onto an upper part (88) of the kingpin (80), wherein, preferably, after the sleeve (100, 101) has been slid on, the lower part (85) is axially thread-joined to the upper part (88), and the sleeve (100, 101) is thereby axially retained.

## Revendications

1. Dispositif d'accouplement pour relier un véhicule tracteur à une semi-remorque, dans lequel sont agencés sur la remorque un axe-pivot (20 ; 80) et sur le véhicule tracteur une sellette d'attelage à éléments de verrouillage pour recevoir, par engagement positif et avec capacité de rotation, des surfaces (26, 27 ; 105, 106) de l'axe-pivot (20 ; 80) présentant sensiblement une symétrie de rotation, lesdites surfaces (26, 27 ; 105, 106) étant constituées d'un revêtement thermique résistant à l'abrasion (41, 42 ; 103, 104), **caractérisé en ce que** les surfaces (26, 27 ; 105, 106) sont formées par des surfaces externes (45 ; 107) d'un manchon (30 ; 100, 101) à revêtement thermique logé sur l'axe-pivot (20 ; 80), le manchon (30 ; 100, 101) étant monté rotatif sur l'axe-pivot (20 ; 80) au niveau de ses surfaces internes (46 ; 108).

2. Dispositif d'accouplement selon la revendication 1, **caractérisé en ce que** le manchon (101a) est doté sur sa surface externe (119) de rugosités (120) dont la profondeur est de préférence supérieure à l'épaisseur du revêtement thermique.

3. Dispositif d'accouplement selon la revendication 1 ou 2, **caractérisé en ce que** les surfaces internes (46 ; 108) sont également formées par un revêtement thermique résistant à l'abrasion.

4. Dispositif d'accouplement selon l'une au moins des revendications 1 à 3, **caractérisé en ce que** le revêtement thermique consiste en une couche à base de carbone, en particulier une couche de carbone sensiblement amorphe.

5. Dispositif d'accouplement selon l'une au moins des revendications 1 à 4, **caractérisé en ce que** le manchon (30) comporte plusieurs éléments et en particulier deux éléments dans la direction circonférentielle.

6. Dispositif d'accouplement selon l'une au moins des revendications 1 à 4, **caractérisé en ce que** le manchon (100, 101) est conçu en plusieurs parties dans la direction axiale.

7. Dispositif d'accouplement selon la revendication 6, **caractérisé en ce que** l'axe-pivot (80) comprend un corps (85, 88) divisé en plusieurs parties dans la direction axiale, une partie inférieure (85) agencée à l'extrémité libre de l'axe-pivot étant amovible et les manchons (100, 101) pouvant être emmanchés sur une partie supérieure (88) du corps (85, 88) lorsque la partie inférieure est ôtée.

8. Dispositif d'accouplement selon l'une au moins des revendications 1 à 7, **caractérisé en ce que** les manchons (100, 101) sont de diamètres différents et appuient contre des faces axialement opposées d'un disque (102) sensiblement radial emmanché sur le corps (85, 88).

9. Dispositif d'accouplement selon la revendication 7 ou 8, **caractérisé en ce que** les manchons (100, 101) sont maintenus axialement par vissage de la pluralité de parties du corps (85, 88).

10. Dispositif d'accouplement
selon l'une au moins des revendications 1 à 9, avec une sellette d'accouplement (110) qui est fixée au véhicule tracteur et comporte une bague d'usure (112) coopérant avec un axe-pivot de la semi-remorque ainsi qu'un crochet de verrouillage (114), les surfaces (118, 124) de la bague d'usure (112) et du crochet de verrouillage (114) qui entrent en contact avec l'axe-pivot présentant une couche antifriction, **caractérisé en ce que** la couche antifriction consiste en une couche à base de carbone (134, 140).

11. Procédé pour la modification des dispositifs d'accouplement pour relier un véhicule tracteur à une semi-remorque, dans lesquels sont agencés sur la remorque un axe-pivot (20 ; 80) et sur le véhicule tracteur une sellette d'attelage à éléments de verrouillage pour recevoir, par engagement positif et avec capacité de rotation, des surfaces de l'axe-pivot (20 ; 80) présentant sensiblement une symétrie de rotation, dans un état permettant un fonctionnement sans lubrifiant et par conséquent sans maintenance, ledit procédé comportant les étapes suivantes :
a) Usiner au tour les surfaces de l'axe-pivot (20 ; 80) pour ôter une épaisseur donnée ;
b) Fabriquer un manchon (30 ; 100, 101) destiné à être emmanché sur l'axe-pivot usiné (20 ; 80), l'épaisseur de paroi du manchon (30 ; 100, 101) étant sensiblement égale à l'épaisseur enlevée au tour ;
c) Doter selon un procédé thermique au moins la surface externe du manchon (30 ; 100, 101) d'un revêtement résistant à l'abrasion (41 ; 103) ; et
d) Emmancher le manchon (30 ; 100, 101) sur l'axe-pivot usiné (20 ; 80), de façon que ledit manchon (30 ; 100, 101) soit mobile en rotation autour dudit axe-pivot.

12. Procédé selon la revendication 11, **caractérisé en ce que** l'axe-pivot (80) est divisé en deux de façon qu'une partie inférieure (85) agencée à l'extrémité libre de l'axe-pivot (80) soit amovible et que le manchon (100, 101) puisse être emmanché sur une partie supérieure (88) de l'axe-pivot (80) lorsque la partie inférieure (85) est ôtée, la partie inférieure (85) étant de préférence vissée axialement à la partie supérieure (88) après emmanchement du manchon (100, 101), assurant ainsi le maintien du manchon (100, 101) dans la direction axiale.
